# EUROPEAN PATENT SPECIFICATION

(11) **EP 1 697 120 B1**
(45) Date of publication and mention of the grant of the patent: **21.04.2010**
(21) Application number: 04822156.8
(22) Date of filing: 21.12.2004
(51) Int. Cl.: B32B 5/24, D21F 7/08

(54) **PRESS FELT WITH IMPROVED DEWATERING PERFORMANCE**
PRESSFILZ MIT VERBESSERTER ENTWÄSSERUNGSEIGENSCHAFT
FEUTRE DE PRESSE AYANT UN POUVOIR DE DESHYDRATATION ACCRU

(30) Priority: 23.12.2003 US 532194 P; 12.08.2004 US 918075; 12.08.2004 US 918152; 12.08.2004 US 918031; 12.08.2004 US 918028
(43) Date of publication of application: 06.09.2006
(73) Proprietor: AstenJohnson, Inc., Charleston South Carolina 29423-8001 (US)
(72) Inventor: DESPAULT, Marc, Pierre, Ottawa, Ontario K1K 4B2 (CA); PATTERSON, Brady, P., Kanata, Ontario K2W 1E1 (CA); JACKSON, Graham, Woodlawn, Ontario K0A 3M0 (CA)
(74) Representative: Perkins, Sarah
(86) International application number: PCT/US2004/042920
(87) International publication number: WO 2006/006952

(56) References cited:
- WO-A1-99/32715
- US-A- 3 392 979
- US-A- 4 520 059
- US-A- 4 529 643
- US-A- 4 781 967
- US-A- 5 204 171
- US-A- 6 140 260

## Description

BACKGROUND

The present invention relates to improved dewatering of a paper web in a press section of a papermaking machine. More particularly, the invention relates to press felts that reduce rewetting of the paper web and increase press efficiency.

Press felts are endless belts which may contain a seam and which are used to convey an embryonic paper web from the forming section, through the press and into the dryer section of a papermaking machine so as to dewater and ultimately dry the paper product so that it is suitable for use. In the press section, at least one press nip is typically provided between either a pair of rotating cylindrical rollers, or a roller and concave shoe. The embryonic paper web passes through the at least one press nip laid either upon a single felt, or sandwiched between at least two press felts. As the web passes through the at least one press nip, water is expressed from it and passes into the at least one press felt.

Papermaker's press felts are well known. See, for example, US 4,199,401 to Liu et al., US 4,356,225 to Dufour, US 4,414,263 to Miller et al., US 4,806,413 to Penven, US 5,360,656 to Rexfelt et al., and US 5,864,931 to Best et al. These felts are usually comprised of a woven base fabric (typically formed of nylon or similar polymeric yarns) to which is attached, generally by needling, at least one layer of a pre-tacked staple fiber web, commonly referred to as a batt. Typical press felt batts will usually include between one and about 5 or more layers of a pre-tacked staple fiber web needled onto a first planar surface of the base fabric (usually the surface which, when in use, will be in contact with the paper sheet, and is hereafter referred to as the "PS") to form a PS batt, and from none to one or more layers needled to the opposite planar surface (which when in use will be in contact with the equipment of the paper machine, and is hereafter referred to as the "MS") to form the MS batt. The staple fibers used to form either or both the MS and PS batt are typically made from one or more nylons, polyesters or other polymeric materials such as are commonly employed in the manufacture of industrial textiles.

The batt provides a smooth surface for the paper web and a void volume into which water, which has been expressed from the paper web at the press nip, can be received. The base fabric provides some additional void volume, as well as a stable structure to which the batt can be attached. The base fabric is typically comprised of interwoven polymeric monofilament or multifilament yarns to which the batt is attached, generally by needling or other entanglement process such as is known in the art.

After the paper web has been pressed in at least one nip in the press section, it will still contain an appreciable amount of water, as much as from 30% to about 60% or more by weight. This remaining water must now be removed in the dryer section of the papermaking machine in order to provide a paper product. The final drying of the paper product is typically carried out by evaporative means, which requires a large amount of energy. This adds substantially to the cost of manufacturing the paper product. Generally, a 1% increase in the dryness of the sheet exiting the press section will translate into about a 4% energy savings in the dryer section. It is also possible that the speed of the paper machine may have to be reduced or at least limited due to the evaporative capacity of the dryer section.

The generally accepted theory of operation of a papermaking machine press section is described in Wahlstrom, P.B., A Long Term Study of Water Removal and Moisture Distribution On A Newsprint Machine Press Section, Parts I and II, Pulp and Paper Mag. Can., 60, No. 8: T379-T401 (Aug. 1960); Id., No. 9: T418-T451 (Sept. 1960). Briefly, on the entrance side of the nip, water is removed by compression and the resulting hydraulic pressure to a maximum dryness, which is achieved at the mid nip point. However, rewetting of the paper web occurs through capillary action that draws water back from the press felt once the paper web has passed through the nip.

There have been a number of attempts to reduce this rewetting, such as by using hydrophilic or hydrophobic fibers or coatings in or on press felts, or the introduction of an anti-rewetting layer on or between the mid layers of the press felt batt. However, while such measures have resulted in limited improvements, there is still the need for improved dewatering in the press section to reduce production costs.

Thus, it would be highly desirable if the water removal characteristics of the press felts could be improved so as to increase the amount of water they are capable of transporting away from the paper product as it passes through the press section.

It has been known to use regenerated cellulosics such as rayon as a component of papermaking fabric batt materials. However, such use has generally been restricted to certain specific circumstances. One known application provided an article of paper machine clothing for a press section of an impulse drying machine having a paper contacting surface layer which included a thermal barrier with sheet release properties, a base structure layer, and at least one intermediate layer. This intermediate layer could include fine denier fibers and/or hydrophilic fibers such as wool, cotton and regenerated cellulosics. Fabrics constructed in this manner and evaluated on a pilot scale impulse drying machine operating at 205°C were reported to have achieved 4 to 5 percentage points of added dryness in the sheet. However, the intermediate layer was heat shielded, and the improved drying appears to have been mainly due to the high drying temperature of about 205°C. This was a press fabric for use at temperatures well above the normal operating temperature range of press sections, which typically run between about 40°C and about 80°C, and clearly involved a different application.

Another known felt included a so-called "flow control" layer located between the batt and base to "impede rewetting of the paper web" as it exits the press nip. This flow control layer was reported to be formed of a spunbonded filamentary nylon material which is noncircular in cross-section (such as trilobal). It was also noted that the flow control layer could be formed from various materials, including rayon. However, a hydrophobic treatment was imparted to the flow control layer to prevent water absorption.

Another known press felt is described in WO99/032715 that includes a high proportion of fibrillatable fibers located in at least the PS surface of the batt so as to provide a relatively fine sheet supporting surface for the paper web. The PS surface was indicated as being formed from fibers which are as fine as possible (below 1 denier in size). These fine fibers occur as a result of the fibrillation of relatively larger regenerated cellulosic fibers (e.g. > 1 denier in size) due to hydroentanglement or mechanical pressure.

A transfer fabric has also been known that includes a base structure and a fiber batt layer which is impregnated with a polymer matrix. The batt fibers differ from one another with respect to their surface properties so that the PS surface of the belt facing the web has both hydrophilic and hydrophobic areas.

The vast majority of press felts which are manufactured for, and are in use in paper mills today, consist of 100% nylon staple fiber in at least the batt, mainly due to its abrasion resistance, resiliency and tenacity.

SUMMARY

In accordance with the present invention, the inventors have determined that the dewatering performance of the press section of a papermaking machine can be improved to remove from about 3% to 8% more water from the paper web by advancing a paper web separation point from the press felt(s) and/or upper roll to limit post mid nip point rewetting of the paper web.

In accordance with one embodiment of the invention, an elastic spring back of the press felt after the mid nip point is retarded in order to advance the paper web separation point towards the mid-nip and point of maximum dewatering. This is accomplished by according to claim 1 by blending a low elasticity staple fiber in form of a non-fibrillatable regenerared cellulosic fiber with known polymeric staple fibers to form the batt of the press felt. It has been determined that the use of regenerated cellulosic staple fibers blended with polymeric staple fibers in the batt material layer(s) provides the desired advance in the paper web separation point by retarding the post nip elastic spring back of the press felt.

Thus, the present invention seeks to provide an improved press felt, which is comprised of a base fabric layer to which one or more layers of batt material is attached, generally by needling or other known techniques. The batt material includes at least two differing types of fibers. The first type is a non-fibrillatable regenerated cellulose material, such as viscose rayon, while the second type is a polymeric fiber, such as nylon.

The different types of fiber are blended together in a ratio of from 20% to 80% : 80% to 20% ratio (cellulosic to polymeric) by weight. In one preferred embodiment, a 50:50 ratio is utilized.

The fibers are from about 1.1 dtex to about 44 dtex or more in size, and have a length of about 1-4 inches (2.5 - 10 cm). More preferably, the fibers are about 3 - 15 dtex in size and are blended together with the polymeric staple fibers to form a pre-tacked batt by carding and needling in a manner well known in the art. It is also contemplated that the fiber types may have differing sizes without this difference materially affecting the dewatering properties of the batt and resulting felt. For example, the regenerated cellulosic staple fibers may have a dtex of about 3 while the other fiber may be in the range of from 5 - 7 dtex, or more.

According to the invention, it has also been found that it is not necessary to restrict the use of the regenerated cellulosic fibers to one layer or location in the batt. Comparable dewatering performance may be obtained when 50% : 50% by weight ratio blends of nylon and viscose rayon staple fiber are incorporated into all layers of the batt. Preferably, however, the 50% : 50% by weight ratio blend of cellulosic and polymeric materials is located on the paper side surface of the batt, closest to the sheet. When a roughly 50% : 50% by weight ratio blend of the regenerated cellulosic fibers is combined with polymeric fibers of roughly the same size (such as nylon-6), the abrasion resistance of the resulting batt is about equal to that of a batt formed entirely from 100% nylon-6 materials. The regenerated cellulosic staple fiber component appears to help to reduce shedding of batt fibers during normal operation of the press felt, thus extending fabric service life. A blend of polymeric and cellulosic fibers also promotes improved fiber anchoring of the batt fibers to the base fabric, batt tenacity and uniformity.

BRIEF DESCRIPTION OF THE DRAWINGS

The present invention will be explained in more detail in connection with the drawings in which presently preferred embodiments are shown.

Figure 1 is a schematic cross-section of a nip in the press section of a papermaking machine in accordance with the teachings of the invention.

Figure 2 is a graph illustrating the dewatering performance of the press section shown in Figure 1.

Figure 3 is a schematic cross-section of a press fabric being constructed in accordance with the teachings of the invention.

Figure 4 is a cross-sectional view showing the press fabric of Figure 3 with a paper web being formed thereon passing through the nip of two press rolls in the press section of a papermaking machine.

Figure 5 is a graph showing the effect of the size of the regenerated cellulosic staple fiber on dewatering performance.

Figure 6 is a schematic cross-section of a press fabric being constructed in accordance with a second embodiment of the invention.

Figure 7 is an enlarged view of a cross-direction multifilament yarn used in an embodiment of the press felt according to the present invention.

Figure 8 is an enlarged view of a cross-direction cabled monofilament used in an embodiment of the press felt according to the present invention.

Figure 9 is a schematic cross-section of a press fabric being constructed in accordance with a third embodiment of the invention.

Figure 10 is a cross-sectional view showing the press fabric of Figure 9 with a paper web being formed thereon passing through the nip of two press rolls in the press section of a papermaking machine.

Figure 11 is a top view, partially broken away, of the PS batt of the press fabric of Figure 10, in which a woven scrim is used in the batt.

Figure 12 is a top view, partially broken away, of the PS batt of the press fabric of Figure 10, in which a non-woven scrim is used in the batt. The press fabrics according to Figures 9-12 do not fall within the scope of the appended claims.

DETAILED DESCRIPTION OF THE PREFERRED EMBODIMENTS

Certain terminology is used in the following description for convenience only and is not considered limiting. Words such as "up", "down", "top", and "bottom" designate direction in the drawings to which reference is made. This terminology includes the words specifically noted above, derivatives thereof and words of similar input. Additionally, the terms "a" and "one" are defined as including one or more of the referenced data unless specifically noted. The following abbreviations are also used herein: MS - "machine side"; PS - "paper side"; MD - "machine direction"; and CD - "cross direction". As used herein, "scrim" is defined as a light weight woven or nonwoven textile such as a mesh or a similar fabric.

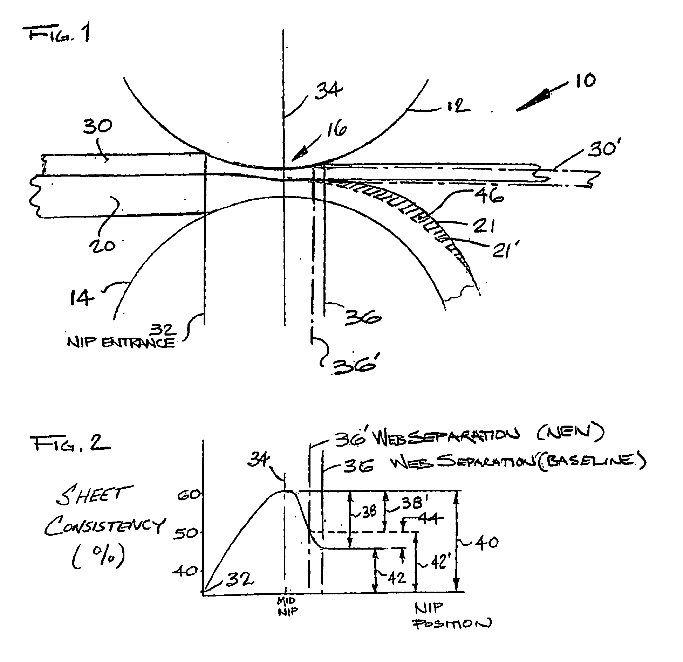

Referring to Figure 1, a portion of a press section 10 of a papermaking machine is shown. The press section 10 includes upper and lower rolls 12, 14 which create a nip 16. A press felt 20 is supported by the lower roll 14, and transports an embryonic paper web 30 from the forming section of the papermaking machine (not shown) to the nip 16 for dewatering. The paper web 30 and the press felt 20 enter the nip 16 at a nip entrance point, indicated by line 32. The paper web 30 and the press felt 20 are compressed in the nip 16 to a point of highest compression at the mid nip point, indicated by line 34, where water is expressed from the paper web 30 into the press felt 20, and can then be further removed through vacuum openings in the lower roll 14.

As soon as the paper web 30 and press felt 20 pass the mid nip point 34, the elasticity of the press felt 20 allows it to spring back to its original thickness, as indicated by the paper side surface (PS), which is illustrated for the known press sections as 21, and for the press section in accordance with the present invention as 21'. This expansion of the press felt allows rewetting of the paper web 30 from the press felt 20 through capillary action until the paper web 30 separates from the press felt 20, as indicated at line 36' for the present invention and 36 for the prior known press sections.

Figure 2 shows the sheet consistency of the web 30 as it passes through the nip 16. Typically the embryonic paper web 30 enters the nip entrance 32 with about 35% to 40% sheet consistency. As the paper web 30 is compressed by the nip 16, the sheet consistency of the web is up to about 60% at the mid nip point 34 in the last presses, prior to entering the dryer section of the papermaking machine. The rewetting that occurs post mid nip 34 generally results in the paper web 30 having a solids content of about 40% to 46% prior to the paper web 30 proceeding to the dryer section of the papermaking machine. This rewetting of 14% to 20%, illustrated at 38, means that although the mid nip consistency achieved, indicated at 40, was about 60%, the actual net gain 42 in moisture removal in the press results in a sheet consistency improvement in the range of about 5% to 8%.

According to the invention, this can be improved to a net gain of moisture removal and hence increased sheet consistency of 10% to 15%, as indicated at 42' by advancing the separation point 36' of the paper web, indicated as 30' for the present invention, from the press felt 20 from 36 to 36', as shown in Figures 1 and 2, to reduce the rewetting, as indicated at 38' in Figure 2, and maintain more of the mid nip 34 moisture removal. This results in a net gain of 2% to 7% or more of moisture removed in accordance with the present invention, as indicated at 44 over the prior known press sections.

The separation point 36' is advanced according to the invention by retarding an elastic spring back of the press felt 20 after the mid nip point 34, as indicated by hatching 46 in Figure 1, between the PS surface 21 of the prior known press section felts and 21' in accordance with the present invention. In one preferred embodiment, the spring back is retarded by providing a press felt 20 with a low elasticity material in at least one of the PS batt, MS batt or base fabric, as described in further detail below. This can be accomplished in accordance with the invention by providing at least one paper support side (PS) batt layer comprised of low elasticity staple fibers in form of, regenerated cellulosic staple fibers, non-fibrillatable blended with polymeric staple fibers, such as nylon 6 or nylon 6/6. In accordance with the invention, low elasticity refers to fibers having an elasticity that is 25% or less than the elasticity of nylon 6 staple fibers under operating conditions in the press section (i.e., wet). In a preferred embodiment, viscose rayon is used as the regenerated cellulosic material.

The 'elastic' property or 'elasticity' of the press felts according to the invention can be determined in a relative manner by measuring the amount of time required for the agglomeration of fibers, including the batt, scrim (if present) and base fabric, comprising the fabrics of this invention to rebound or recover to their original, pre-nip compression height (thickness) in comparison to the prior art nylon press felts. This can be measured through the use of a high speed CCD camera to observe a thickness of the previously known press felts and the press felt according to the invention prior to, during and post compression in the nip. One such camera that appears to be suitable is an Ultra Fast Framing Camera which is available from Princeton Scientific Instruments, Inc in Monmouth Junction, New Jersey.

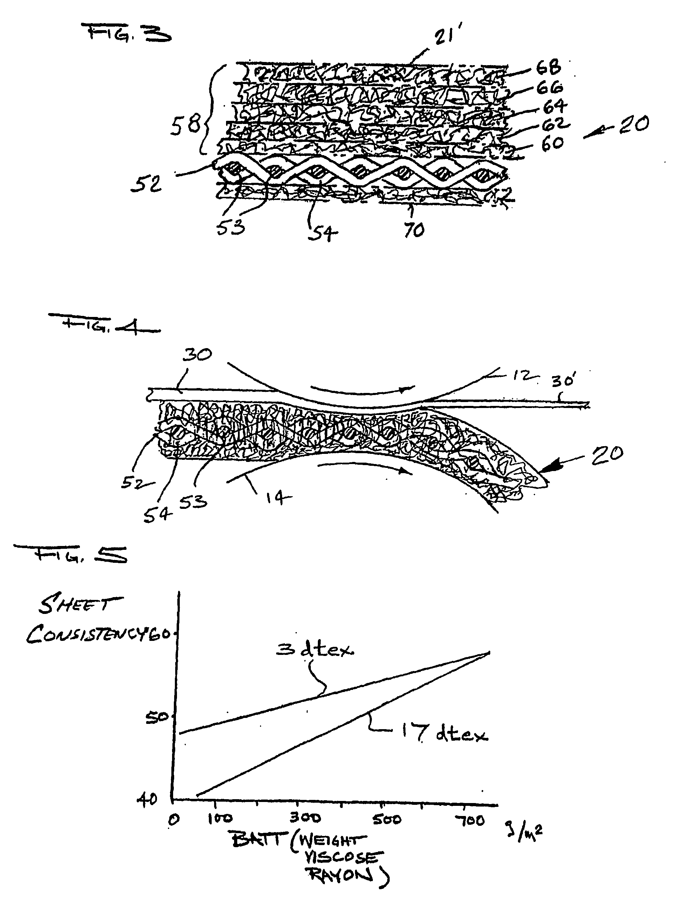

Referring to Figure 3, the press felt 20 in accordance with the present invention is schematically illustrated. The press felt 20 includes a base fabric layer 52 and at least one layer of a staple fiber batt 58 connected to the base fabric layer 52.

The base fabric 52 can be a flat or endlessly woven fabric of the type known to those skilled in the art. Alternatively, the base fabric layer can be a spirally wound construction in which a strip of material having a width less than an overall width of the press felt 20 is helically or spirally wound to achieve a desired width of the press felt 20, and the adjacent edges of the wound strip are connected together, for example, as disclosed in U.S. Patents 5,360,656 or 5,268,076.

Preferably, the at least one layer of staple fiber batt 58 comprises a plurality of layers of staple fiber batt material 60, 62, 64, 66, 68 located on the PS 21' of the base fabric 52. One or more layers of staple fiber batt material 70 may also be located on the MS of the base fabric 52, as shown in Figure 3. The staple fiber batt material is comprised of between 20% to 80% by weight of the low elasticity staple fiber, i.e. of the non-fibrillatable, regenerated cellulosic staple fiber, and from 80% to 20% by weight of a polymeric staple fiber. These staple fiber batt material layers 60, 62, 64, 66, 68 are preferably carded into batt layers having a desired density and connected to the base fabric layer 52 by a needling process of the type known in the art. More preferably, each of the staple fabric batt material layers 60, 62, 64, 66, 68 is comprised of between 50% to 80% by weight on the regenerated cellulosic staple fiber and from 50% to 20% by weight of polymeric staple fiber. In a most preferred embodiment which has been subject to extensive testing, each of the staple fiber batt material layers 60, 62, 64, 66, 68 are comprised of about 50% by weight of the regenerated cellulosic staple fiber and about 50% by weight of the polymeric staple fiber. The separate layers of staple fiber batt material 60, 62, 64, 66, 68 are represented in Figure 3 prior to needling where the distinct layers can be seen. After needling, as shown in Figure 4, a uniform more dense press felt 20 is formed with the staple fibers of the at least one layer of staple fiber batt 58 being anchored into the base fabric 52 through the needling process.

The low elasticity staple fiber in the staple fiber batt material 60, 62, 64, 66, 68 has a dtex from at least about 1.1 to about 44. When a plurality of layers of staple fiber batt material 60, 62, 64, 66, 68 are utilized, as shown in Figure 3, it is preferred that the low elasticity staple fiber in the layer of staple fiber batt 68 located on the PS of the press felt 20 has a smaller size than the staple fiber of batt material of an intermediate layer of the staple fiber batt material 60, 62 adjacent to the base fabric 52. In one preferred embodiment, the low elasticity staple fibers in the PS batt layers 66, 68 have a dtex of about 2 to about 6 and the low elasticity fibers of the intermediate batt layer 60, 62 have a dtex of about 8 to about 20. While these low elasticity staple fiber sizes have proven successful, applicants have also achieved improvements in dewatering by utilizing low elasticity staple fibers of the same size in each of the layers of staple fiber batt material 60, 62, 64, 66, 68. Accordingly, the sizes can be adjusted based on the particular application.

It has been found that by providing a uniform mix of the low elasticity staple fibers throughout the batt material layers, better dewatering results are obtained. However, it would also be possible to provide one or more of the intermediate layers formed entirely of a polymeric staple fiber near or adjacent to the base fabric 12, if desired.

It has been found in connection with the invention that if the regenerated cellulosic staple fibers and the polymeric staple fiber yarns have too small of a size, the performance of the fabric may be compromised. Accordingly, in the most preferred embodiments of the invention, the regenerated cellulosic staple batt fibers have a dtex of at least 3.

Preferably, at least a portion of the regenerated cellulosic staple fibers are located at or near the PS 21' of the press felt 52. In this embodiment, the PS staple fiber batt material layers 66, 68 generally comprise a uniform distribution of the regenerated cellulosic staple fibers with the polymeric staple fiber. This blending can take place through mixture of the staple fibers prior to the fibers being carded to form the batts. In one preferred embodiment, the polymeric staple fibers and the regenerated cellulosic staple fibers have approximately an equal size. For example, both the regenerated cellulosic staple fibers and the polymeric staple fibers have a dtex of from about 3 to about 6.

The regenerated cellulosic staple fiber material is preferably viscose rayon, and may be solid, hollow or otherwise shaped, such as Viloft® available from Courtaulds. It has been found that regenerated cellulosic fibers which have a low elasticity and which are resistant to fibrillation are preferred for this use. Polymeric staple fibers comprised of nylon, polypropylene, polyethylene terephthalate and the like, may be suitable for blending in the present invention.

Preferably, the regenerated cellulosic staple fibers are Merge 8142 viscose rayon having a dtex of about 3.3 available in about 2 inch lengths from Lenzing Fiber Corp. of Charlotte, NC. Similar viscose rayon staple fibers may provide comparable results.

Preferably, the polymeric fiber is comprised of one or more of nylon 6, nylon 6/6, nylon 6/10, nylon 6/11 or nylon 6/12. Alternatively, it may comprise one of polypropylene (PP), polyethylene terephthalate (PET) or other polymeric fiber materials such as commonly used in industrial textiles. Preferably, the dtex of both is at least about 3, and the regenerated cellulosic staple fiber is viscose rayon. The regenerated cellulosic fiber is non-fibrillatable. Optionally, the regenerated cellulosic fiber is flame retardant to assist with processing.

In one preferred embodiment, the staple fiber batt material includes a melt fusible polymeric bi-component staple fiber. This allows the batt material to not only be anchored to the base fabric 52 by needling but also allows heat treatment of the fabric to further lock the fibers of the staple fiber batt material in place to reduce shedding.

Referring to Figure 5, preferably a weight of the low elasticity staple fiber in the staple fiber batt 58 in the press felt 20 is from about 75 to about 1000 gsm (grams per square meter). While the dtex of the low elasticity staple fibers does have some effect on the amount of water removed from the paper web 30', with the smaller dtex fibers providing higher moisture removal at lower densities, it has been found that the dtex of the low elasticity fibers becomes less of a factor as the density is increases, to a point where the dtex does not appear to be a factor for densities of 700 gsm and higher.

More preferably, a weight of the low elasticity staple fiber in the staple fiber batt 58 in the press felt 20 is about 300 to about 700 gsm. In a most preferred embodiment of the invention, a weight of the low elasticity fiber in the staple fiber batt 58 for the press felt 20 is from about 350 to about 700 gsm. This weight is preferably achieved by providing multiple layers of staple fiber batt material 60, 62, 64, 66, 68 on the PS 21' of the base fabric 52.

Additionally, as shown in Figure 3, one or more layers of staple fiber batt material 70 which may be comprised of polymeric fibers on regenerated cellulosic staple fibers is/are provided on the machine side (MS). The weight of each of these layers is typically in the range of 50 to 100 gsm. By constructing the felt with multiple layers of staple fiber batt material 60, 62, 64, 66, 68 and 70, further variations in construction can be obtained such as varying the dtex of the of staple fiber batt material in the PS layers 66, 68 in comparison to the intermediate layers 60, 62, 64. However, it is preferred that each of the PS layers include some of the low elasticity staple fiber batt material.

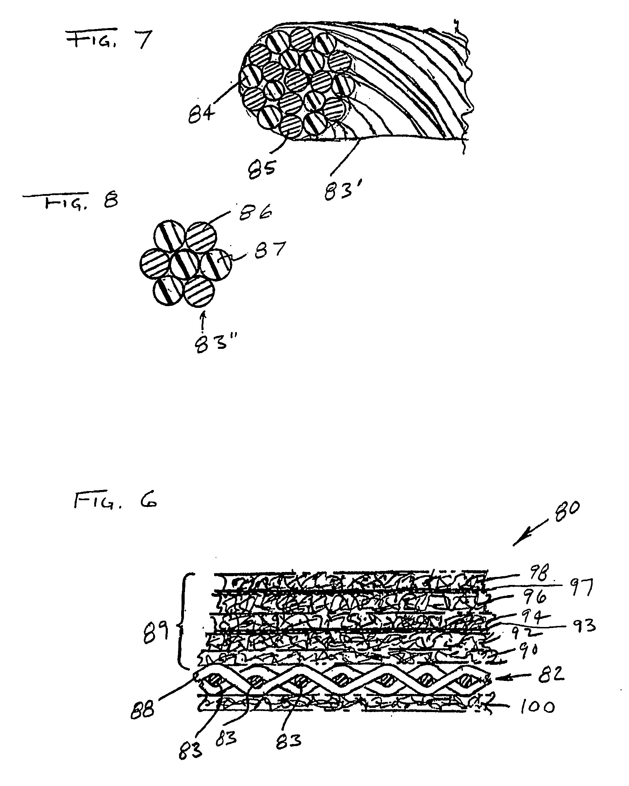

In accordance with another aspect of the invention, as shown in Figure 6, improvements in dewatering can be obtained using a press felt 80 in which at least a portion of the base fabric 52 includes a regenerated cellulosic material. Preferably, at least some of the CD yarns 83 of the base fabric 82 are at least partially comprised of a regenerated cellulosic material. The CD yarns 83 can comprise monofilaments comprised of a regenerated cellulosic material. Alternatively, the CD yarns 83 can be formed as multifilaments, such as 83' in Figure 7, that include regenerated cellulosic fiber filaments 84 which may be mixed with polymeric fiber filaments 85. The filaments preferably have an individual dtex of about 6 to 15. The multifilament preferably has a weight in a range of 200 to 400 tex. In a preferred embodiment, the multifilaments are either entirely comprised of viscose rayon or are comprised of a rayon component blended with e.g. nylon, or some other suitable polymer.

Additionally, the CD yarns 83 can also be formed as cabled monofilaments 83", as shown in Figure 8. The cabled monofilaments 83"preferably include monofilaments formed of a polymer 86 and monofilaments formed of a regenerated cellulosic material 87, such as viscose rayon. The individual monofilaments preferably have a diameter on the order of 0.05 to 0.3mm, and more preferably have a diameter of about 0.2mm. The number of monofilaments used in each "cable" is preferably on the order of 4 to 10. However, the size and number of monofilaments can be varied based on the particular application.

Preferably, the CD yarns 83 which comprise the monofilaments, multifilaments or cabled monofilaments are comprised at least partially of the regenerated cellulosic material, so that approximately 20% to 100% by weight of the CD yarns 83 is comprised of the regenerated cellulosic material. In order to maintain the strength of the base fabric 82, it is preferred that at least some of the CD yarns 83 are comprised at least partially of a polymeric material, such as nylon. Alternatively, certain ones of the CD yarns 83 can be formed entirely of a polymeric material.

Referring again to Figure 6, it is also possible to incorporate a regenerated cellulosic material into the MD yarns 88, through the use of multifilaments or cabled monofilaments, as discussed above. In such applications, it is preferred that at least some of the MD yarns 88, or some of the filaments in the MD multifilaments or some of monofilaments in MD cabled monofilaments comprise nylon or another suitable polymeric material having the desired strength and mechanical properties required to provide the necessary strength and elongation resistance required for a press felt. While the base fabric 82 in Figure 6 is illustrated as being a flat woven or a spiral wound construction, those skilled in the art will recognize from the present disclosure that if the fabric were endless woven, then the directions of the MD and CD would be reversed.

Preferably, the base fabric 82 according to this embodiment of the invention includes from 10% to 80% by weight of the regenerated cellulosic material. More preferably, the base fabric 82 comprises from 20% to 50% by weight of the regenerated cellulosic material. It is believed that this construction of the base fabric 82 will aid in the dewatering performance of the press felt 80. Those skilled in the art will recognize that the particular weave and construction of the base fabric 82 can be varied based on the particular application, and the base fabric 82 in accordance with the invention is not limited to a particular weave or construction method.

In order to further enhance the dewatering properties of the press felt 80, at least one layer of staple fiber batt 89 is provided, and preferably comprises a plurality of layers of staple fiber batt material 90, 92, 94, 96, 98 located on the PS of the base fabric 82. One or more layers of staple fiber batt material 100 may also be located on the MS of the base fabric 82, as shown in Figure 6. The staple fiber batt material layers are preferably carded into batt layers having a desired density and connected to the base fabric layer 82 by a needling process of the type known in the art. The staple fabric batt material layers 90, 92, 94, 96, 98 are similar to the batt material layers 60, 62, 64, 66, 68 as described above in connection with the first embodiment of the press felt 20. Additionally, the MS batt material layer 100 is similar to the MS batt material layer 70 described above.

While the base fabric 82 is preferably a woven fabric, it is also possible to use a non-woven fabric as the base fabric which comprises polymeric fibers and regenerated cellulosic staple fibers. Additionally, one or more woven or non-woven scrims 93, 97 of the low elasticity staple fiber material, preferably of the regenerated cellulosic material, can be located between the staple fiber layers 90, 92, 94, 96, 98. As used herein, "scrim" is defined as a light weight woven or nonwoven textile such as a mesh or a similar fabric, and can be oriented in any direction with respect to the CD and MD. For example, the scrim can be arranged at 0° or 90°, generally parallel to the base fabric, or can be arranged at an angle of 45° with respect to the MD and CD. If the scrim is spirally wound into the felt, it can be at an angle of 1° to 10° with respect to the MD.

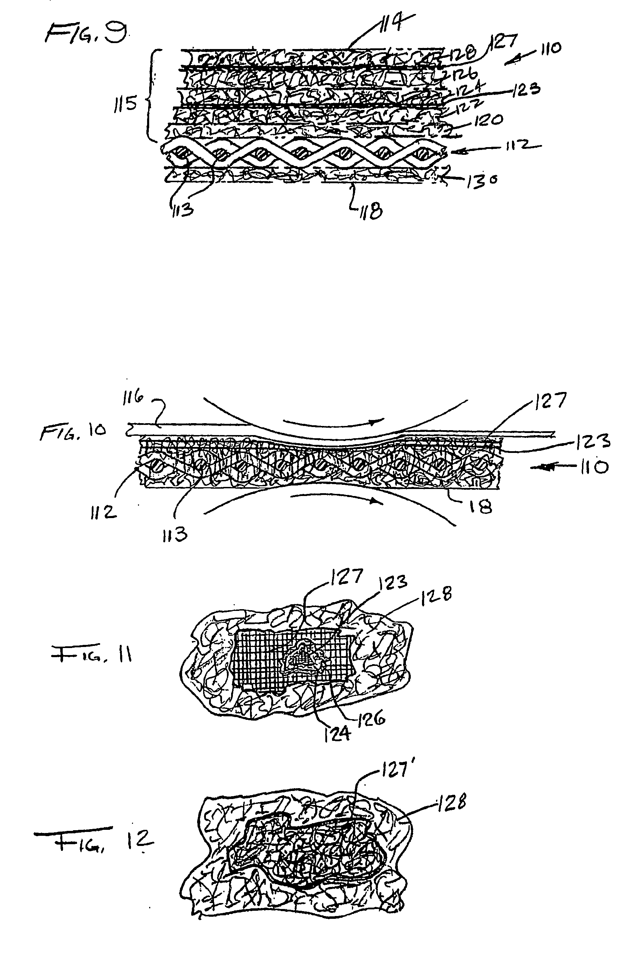

Referring now to Figure 9, a press felt 110 for use in the press section of a papermaking machine which does not fall within the scope of the claims is schematically illustrated. The press felt 110 includes a base fabric layer 112 and at least one layer of a staple fiber batt material 115 connected to the base fabric layer 112. The press felt has a PS 114 which when in operation is in contact with the paper web 116, as shown in Figure 10, and a MS 118 which contacts various press section components, such as the lower press roll shown in Figure 10.

The base fabric layer 112 is similar to the base fabric 52 described above. Preferably, the at least one layer of staple fiber batt 115 comprises a plurality of layers of staple fiber batt material 120,122, 124, 126, 128 which are preferably located on the PS of the base fabric 112. One or more layers of staple fiber batt material 130 may also be located on the MS of the base fabric 112, as shown in Figure 9. The staple fiber batt material is preferably comprised of a polymeric staple fiber, such as nylon. These staple fiber batt material layers 120, 122, 124, 126, 128 are preferably carded into batt layers having a desired density and connected to the base fabric layer 112 by a needling process of the type known in the art. The separate layers of staple fiber batt material 120, 122, 124, 126, 128 are represented in Figure 9 prior to needling where the distinct layers can be seen. After needling, as shown in Figure 10, a uniform more dense press felt is formed with the fibers being anchored into the base fabric 112 through the needling process.

Located between at least two of the layers of staple fiber batt material 126, 128 is a scrim 127 formed at least partially of a regenerated cellulosic material. As shown in Figure 9, additional scrim(s) 123 can be located between other layers of the staple fiber batt material 120, 122, 124, 126, 128 and or the layer of staple fiber batt material 120 adjacent to the base fabric layer 112. Additionally, multiple scrims can be located adjacent to one another in the batt stratification.

The regenerated cellulosic fibers in the scrim 123, 127 may have a dtex from at least about 1.1 to about 44. When a plurality of scrims 123, 127 are utilized, as shown in Figure 9, it is preferred that the regenerated cellulosic fibers in the scrim 127 adjacent to the layer of staple fiber batt 128 on the PS of the press felt 110 has a smaller size than the fiber of the scrim 123 located between intermediate layers of the staple fiber batt material 120, 122, 124, 126 and or adjacent to the base fabric 112. The regenerated cellulosic fibers in the scrim 127 have preferably a dtex of about 2 to about 6 and the regenerated cellulosic fibers of the scrim 123 have a dtex of 8 to about 20. While these regenerated cellulosic fiber sizes are believed to yield improvements in dewatering, applicants have also achieved improvements by utilizing regenerated cellulosic fibers of the same size in each of the scrims 123, 127. Accordingly, the sizes can be adjusted based on the particular application.

As shown in Figure 11, the scrims 123, 127 may be formed as a woven fabric made at least partially from regenerated cellulosic fibers. The scrims 123, 127 can include other types of polymeric fibers, such as polyamides, and in particular polyamide 6 or polyamide 6/6. The regenerated cellulosic fibers preferably extend in the CD, or the CD yarns are formed of twisted fibers, at least some of which are regenerated cellulosic fibers. As used herein, "twisted fiber" refers to any multicomponent yarn, such as spun yarns or multifilament yarns. Alternatively, the regenerated cellulosic fibers can extend in both the CD and MD. Preferably, the scrim 123, 127 includes from 10% to 100% of the regenerated cellulosic fibers, and more preferably from 20% to 80% regenerated cellulosic fibers. While the scrims 123, 127 are illustrated with the yarns of the woven material oriented generally in the CD and MD, in another embodiment of the invention when two or more scrims 123, 127 of woven fabric are utilized, at least one of the scrims is oriented so that the yarns of the woven yarn system are oriented from 30° to 60° with respect to the MD and CD of the press felt 110, and more preferably at 45° with respect to the MD and CD. However, it is possible to orient the woven yarn system at any angle between 0° and 90° with respect to the MD. One means of doing this is to spirally wind the scrim over the assembled base fabric and batt, or between layers of batt, in a manner similar to the spiral wound felt construction of U.S. Patent 5,864,931, so that the scrim is oriented at an angle of from about 1° to about 10° to the MD. The scrims 123, 127 can be located between any two layers of the batt material, or attached to the PS or MS surface of the press felt 110.

The scrim 123, 127 of woven material can be manufactured using the same techniques that are known to those skilled in the art by flat or endless weaving, and can be produced the full width of the press felt 110, or can be produced as a narrower band of material that is spirally wound onto the press felt 110 as it is being formed.

Alternatively, as shown in Figure 12, the at least one scrim 127', and preferably all of the scrims 127', utilized in the press felt 110 are formed of a nonwoven material that includes at least some fibers formed of a regenerated cellulosic material. The nonwoven material is preferably formed through a process wherein the fibers are blended and randomly aligned into a web by an airflow, and can be connected together through binding agents in order to form a nonwoven mesh. Preferably, from 10% to 100% of the fibers are regenerated cellulosic material, such as viscose rayon. Alternatively, the fibers are a blend of regenerated cellulosic fibers and polymeric fibers in a ratio of from about 80% to 20% regenerated cellulosic fibers to 20% to 80% polymeric fibers.

It has been found that if the regenerated cellulosic staple fibers of the scrim 123, 127 and the polymeric staple fiber yarns of the batt 115 have too small of a size that one or more performance characteristics of the fabric are adversely affected. Accordingly, the regenerated cellulosic fibers of the scrim 123, 127 have most preferably a dtex of at least about 3, and the polymeric staple fibers of the batt also have a dtex of at least about 3.

The regenerated cellulosic fiber material is preferably viscose rayon, and may be solid, hollow or otherwise shaped, such as Viloft® available from Courtaulds. It has been found in experimental trials that regenerated cellulosic fibers which are resistant to fibrillation are preferred for this use.

Alternatively, the scrim 123, 127 can contain bi-component fibers having an outer sheath made of a low melting point polymer, and an inner core made of a higher melt point polymer. Upon heat treatment of the press felt 110, the low melt point sheath material at least partially melts and helps to retain the other fibers in the batt layers and scrim in place. Other types of bi-component yarns may also be used.

Preferably, a weight of the regenerated cellulosic fibers in the PS scrim(s) in the press felt is from about 75 to about 1000 gsm (grams per square meter). More preferably, a weight of the regenerated cellulosic staple fiber in the scrim(s) 123, 127 in the press felt is about 300 to about 700 gsm.

Additionally, one or more layers of staple fiber batt material 130 which may be comprised of polymeric fibers is/are provided on the MS 118. Additional scrim(s) of the regenerated cellulosic material can also be located between these MS batt material layer(s) 130 and the base fabric layer 112, depending on the particular application.

Those skilled in the art will recognize from the above-described embodiments that improved dewatering can be achieved through the use of low elasticity fibers, and in particular non-fibrillatable regenerated cellulosic fibers, in the batt of the press felt.

In accordance with the invention, further improvements in reducing re-wetting of the paper web 30' after it has passed through the nip 16 of the press rolls 12, 14 are provided if a hydrophobic surface treatment is applied to the PS of the batt 58, 89, 115 or to at least a portion of the low elasticity staple fibers in the staple fiber batt material layers 60, 62, 64, 66, 68 can be coated prior to carding and/or prior to needling. While this appears counterintuitive, it is believed that improved capillary action for removing water from the PS of the press felt 20, 80, 110 results from the hydrophobic treatment. In testing conducted on press felts in accordance with the invention, hydrophobic treatment resulted in approximately 1% better moisture removal from the paper web 30'.

Alternatively, hydrophobic surface treatment can also be applied to at least one of the base fabric, the batt, the scrim and/ or the regenerated cellulosic fibers in the base fabric, the batt or scrim in order to obtain better moisture removal.

Experimental Trials

An experimental trial was conducted at a paper mill to determine the dewatering capacity and performance characteristics of a felt constructed in accordance with the teachings of the present invention. The press felt consisted of two layers of a base fabric whose basis weight was about 600 gsm (grams per square meter), to which 5 layers of a 75 gsm basis weight, 10dtex nylon batt material having a basis weight of about 375 gsm (i.e.: 5 x 75 gsm) was needled; a further 4 layers of 3.3 dtex fiber batt material consisting of a blend of about 50% by weight nylon-6 and about 50% by weight of viscose rayon material was needled onto the outer most of this first 5 layers. The viscose rayon was Merge 8142 available from Lenzing Fibers Corp. of Charlotte, NC. The felt was assembled using normal industrial textile assembly methods consistent with the manufacture of papermakers' press felts and then installed in the first press position (i.e. the press closest to the forming section) of a papermaking machine. A control felt, which did not include any regenerated cellulosic fibers in the batt, was run the day before the experimental installation. The machine was run at a speed of about 840 meters per minute (2,750 fpm (feet per minute)). The experimental and control fabrics were exposed to identical physical conditions of furnish, temperature, machine speed, etc.

The consistency of the sheet was measured immediately downstream of the press nip. Measurements were made by means of "grab sampling" portions of the pressed sheet whereby a metal cup was used to remove a sample of the sheet immediately following the first press nip. The samples were each weighed, then oven dried and weighed again to determine their moisture content. We found that, on average, the control felt provided about 42.3% consistency as compared to 46.8% consistency for the trial felt. This represents an improvement in sheet consistency following the nip of 4.5%. The consistency was measured at normal operating temperatures, between 40 and 80 degrees C, for the press environment.

**Table 1:**

| **Laboratory Trials** | | | |
|---|---|---|---|
| **Sample No.** | **Fabric Construction** | **% Consistency** | **Improvement** |
| | **Trial # 1** | | |
| N161 | PS: 150 gsm 3.3 dtex nylon batt | | |
| | PS: 8 layers 50 gsm Rayon Scrim | 54.40% | na |
| | 2 layers spirally wound woven polymeric base fabric | | |
| | MS: 1 layer 100 gsm 6.7 dtex nylon batt | | |

| | **Trial.#2** | | |
|---|---|---|---|
| N167A | PS: 150 gsm 3.3 dtex nylon batt | | |
| | PS: 2 layers 50 gsm Rayon scrim | | |
| | PS: 200 gsm 15 dtex nylon batt | 46.20% | |
| | 2 layers spirally wound woven polymeric base fabric | | |
| | MS: 1 layer 100 gsm 15 dtex nylon batt | | |
| | | | 1.50% |
| N167B | PS: 150 gsm 3.3 dtex nylon batt | | |
| Control | PS: 3 layers 100 gsm 15 dtex nylon batt | 44.70% | |
| | 2 layers spirally wound woven polymeric base fabric | | |
| | MS: 1 layer 100 gsm 15 dtex nylon batt | | |

| | **Trial # 3** | | |
|---|---|---|---|
| N169A | PS: 150 gsm 3.3 dtex nylon batt | | |
| | PS: 4 layers 50 gsm Rayon scrim | 50.60% | |
| | PS: 200 gsm 15 dtex nylon batt | | |
| | 2 layers spirally wound woven polymeric base fabric | | |
| | MS: 1 layers 100 gsm 15 dtex batt | | |
| | | | 6.00 % |
| N169B | PS: 150 gsm 3.3 dtex nylon batt | | |
| Control | PS: 3 layers 100 gsm 15 dtex nylon batt | 44.60% | |
| | | | |
| | 2 layers spirally wound woven polymeric base fabric | | |
| | MS: 1 layer 100 gsm 15 dtex nylon batt | | |

| | **Trial # 4** | | |
|---|---|---|---|
| N171A | PS: 180 gsm 1.7 dtex nylon batt | | |
| | PS: 4 x 50 gsm Rayon scrim | | |
| | PS: 200 gsm 15 dtex nylon batt | 53.40% | |
| | 2 layers spirally wound woven polymeric base fabric | | |
| | MS: 1 layer 100 gsm 15 dtex nylon batt | | |
| | | | 7.10% |
| N171B | PS: 150 gsm 3.3 dtex nylon batt | | |
| Control | PS: 300 gsm 15 dtex nylon batt | | |
| | 2 layers spirally wound woven polymeric base fabric | 46.30% | |
| | MS: 1 layer 100 gsm 15 dtex nylon batt | | |

| | **Trial # 5** | | |
|---|---|---|---|
| N192A | PS: 150 gsm 3.3 dtex nylon batt | | |
| | PS: 100 gsm Hand Carded 3.3 dtex Rayon | | |
| | PS: 300 gsm 15 dtex nylon batt | 52.00% | |
| | 2 layers spirally wound woven polymeric base fabric | | |
| | MS: 100 gsm 15 dtex nylon batt | | |
| | | | 6.90% |
| N192B | PS: 150 gsm 3.3 dtex nylon batt | | |
| Control | PS: 100 gsm 15 dtex nylon batt | | |
| | PS: 300 gsm 15 dtex nylon batt | 45.10% | |
| | 2 layers spirally wound woven polymeric base fabric | | |
| | MS: 100 gsm 15 dtex nylon batt | | |
| | | | |
| N192C | PS: 150 gsm 3.3 dtex nylon batt | | |
| Control | PS: 100 gsm 3.3 dtex nylon batt | 48.50% | 3.50% |
| | PS: 300 gsm 15 dtex nylon batt | | |
| | 2 layers spirally wound woven polymeric base fabric | | |
| | MS: 100 gsm 15 dtex nylon batt | | |

| | **Trial # 6** | | |
|---|---|---|---|
| N192E | PS: 150 gsm 3.3 dtex nylon batt | | |
| | PS: 300 gsm carded 3.3 dtex Rayon | 55.00% | |
| | PS: 100 gsm 15 dtex nylon batt | | |
| | 2 layers spirally wound woven polymeric base fabric | | |
| | MS: 100 gsm 15 dtex nylon batt | | 5.90% |
| | | | |
| N192F | PS: 150 gsm 3.3 dtex nylon batt | | |
| Control | PS: 300 gsm 3.3 dtex nylon batt | 49.10% | |
| | PS: 100 gsm 15 dtex nylon batt | | |
| | 2 layers spirally wound woven polymeric base fabric | | |
| | MS: 100 gsm 15 dtex nylon batt | | |

| | **Trial # 7** | | |
|---|---|---|---|
| N 193 | PS: 150 gsm 3.3 dtex nylon batt | | |
| | PS: 300 gsm carded 1.3 dtex Rayon | | |
| | PS: 100 gsm 15 dtex nylon batt | 55.20% | |
| | 2 layers spirally wound woven polymeric base fabric | | |
| | MS: 100 gsm 15 dtex nylon batt | | |
| | | | 2.50% |
| N193B | PS: 150 gsm 3.3 dtex nylon batt | | |
| Control | PS: 270 gsm 1.7 dtex Grilon M369 nylon | 52.70% | |
| | PS: 100 gsm 15 dtex nylon batt | | |
| | 2 layers spirally wound woven polymeric base fabric | | |
| | MS: 100 gsm 15 dtex nylon batt | | |

| | **Trial # 8** | | |
|---|---|---|---|
| N194A | PS: 150 gsm 3.3 dtex nylon batt | | |
| | PS: 150 gsm carded 3.3 dtex Rayon | | |
| | PS: 200 gsm 15 dtex nylon batt | 52.40% | |
| | 2 layers spirally wound woven polymeric base fabric | | |
| | MS: 100 gsm 15 dtex nylon batt | | |
| | | | 5.40% |
| N194B | PS: 150 gsm 3.3 dtex nylon batt | | |
| Control | PS: 150 gsm 3.3 dtex nylon | | |
| | PS: 200 gsm 15 dtex nylon batt | 47.00% | |
| | 2 layers spirally wound woven polymeric base fabric | | |
| | MS: 100 gsm 15 dtex nylon batt | | |

| | **Trial # 9** | | |
|---|---|---|---|
| N195A | PS: 150 gsm 3.3 dtex carded rayon fiber | | |
| | PS: 150 gsm 3.3 dtex nylon batt | | |
| | PS: 200 gsm 15 dtex nylon batt | 51.60% | |
| | 2 layers spirally wound woven polymeric base fabric | | |
| | MS: 100 gsm 15 dtex nylon batt | | |
| | | | 5.80% |
| N195B | PS: 150 gsm 3.3 dtex nylon batt | | |
| Control | PS: 150 gsm 3.3 dtex nylon batt | | |
| | PS: 200 gsm 15 dtex nylon batt | 45.80% | |
| | 2 layers spirally wound woven polymeric base fabric | | |
| | MS: 100 gsm 15 dtex nylon batt | | |

| | **Trial # 10** | | |
|---|---|---|---|
| N196A | PS: 200 gsm 6.7 dtex nylon | | |
| | PS: 300 gsm 3.3 dtex carded rayon fiber | 52.80% | |
| | 2 layers spirally wound woven polymeric base fabric | | |
| | MS: 100 gsm 15 dtex nylon batt | | |
| | | | 3.60 % |
| N196B | PS: 200 gsm 6.7 dtex nylon | | |
| Control | PS: 300 gsm 3.3 dtex nylon batt | 49.20% | |
| | PS: 100 gsm 15 dtex nylon batt | | |
| | 2 layers spirally wound woven polymeric base fabric | | |
| | MS: 100 gsm 15 dtex nylon batt | | |

| | **Trial # 11** | | |
|---|---|---|---|
| N197A | PS: 300 gsm 3.3 dtex carded rayon fiber | | |
| | PS: 300 gsm 15 dtex nylon | 55.20% | |
| | 1 layer spirally wound polymeric base fabric (Prizm XF Base 705) | | |
| | 1 layer full width woven base (Maxxum Base 107) | | |
| | | | 8.00% |
| N197B | PS: 300 gsm 3.3 dtex carded nylon staple fiber | | |
| Control | PS: 300 gsm 15 dtex nylon | 47.20% | |
| | 1 layer spirally wound polymeric base fabric (Prizm XF Base 705) | | |
| | 1 layer full width woven base (Maxxum Base 107) | | |

| | **Trial # 12** | | |
|---|---|---|---|
| N198A | PS: 75 gsm 3.3 dtex nylon | | |
| | PS: 300 gsm 3.3 dtex carded rayon staple fiber | | |
| | PS: 300 gsm 15 dtex nylon | 58.10% | na |
| | 2 layers spirally wound woven polymeric base fabric | | |
| | MS: 100 gsm 15 dtex nylon batt | | |

| | **Trial # 13** | | |
|---|---|---|---|
| No.4018101 | PS: 300 gsm 50/50 blend of 3.3 dtex rayon and nylon staple fibers | | |
| Full size production trial | PS: 375 gsm 11 dtex nylon staple fiber batt | 54.20% | |
| | 1 layer spirally wound polymeric base fabric (Prizm XF Base 705) | | |
| | 1 layer full width woven base (Maxxum Base 107) | | |
| | | | 7.00 % |
| Full size production control | PS: 300 gsm 3.3 dtex nylon staple fiber | | |
| | PS: 300 gsm 15 dtex nylon staple fiber | 47.20% | |
| | 1 layer spirally wound polymeric base fabric (Prizm XF Base 705) | | |
| | 1 layer full width woven base (Maxxum Base 107) | | |

| | **Trial # 14** | | |
|---|---|---|---|
| N203A | PS: 75 gsm 3.3 dtex nylon staple fiber | | |
| | PS: 300 gsm 50/50 blend of 3.3 dtex rayon and nylon staple fibers | | |
| | PS: 200 gsm 15 dtex nylon staple fiber | 53.00% | |
| | 2 layers spirally wound woven polymeric base fabric | | |
| | MS: 100 gsm 15 dtex nylon batt | | |
| | | | 5.80% |
| N203B | PS: 75 gsm 3.3 dtex nylon staple fiber | | |
| Control | PS: 300 gsm 3.3 dtex nylon staple fiber | | |
| | PS: 200 gsm 15 dtex nylon staple fiber | 47.20% | |
| | 2 layers spirally wound woven polymeric base fabric | | |
| | MS: 100 gsm 15 dtex nylon batt | | |

| | **Trial # 15** | | |
|---|---|---|---|
| Full size production trial | PS: 300 gsm 50/50 blend of 3.3 dtex rayon and nylon staple fiber | | |
| | PS: 375 gsm 11 dtex nylon staple fiber batt | 46.80% | |
| | 1 layer spirally wound polymeric base fabric | | |
| | 1 layer full width woven base | | |

Tests N161, N167A, N169A, N171A, relate to press felts in accordance with Figure 9, in which one or more low elasticity scrims formed of a regenerated cellulosic material were incorporated into the batt. The scrim used in the experimental tests was a commercially available fabric made from 100% rayon natural pulp fibers in 8 layers. The fabric was woven from multifilaments in a plain weave and had a mesh and knock of approximately 20 x 21 (warp x weft per inch). Each layer had an air permeability of about 304.8 meters per minute (1,000 cfm) and the assembled scrim had an air permeability of about 138.4 meters per minute(495 cfm). The caliper of the scrim was approximately 2.0 mm and the caliper of each of the 8 layers was about 0.35 mm. The basis weight of each layer was about 56 gsm and the basis weight of the fabric was 454 gsm. The individual fiber size of the multifilament yarn components used to weave the fabric was about 1.8 dtex, and the multifilament was about 0.20 mm in diameter.

While the preferred embodiments of the invention have been described in detail, the invention is not limited to these specific embodiments described above which should be considered as merely exemplary. Further modifications and extensions of the present invention may be developed and all such modifications are deemed to be within the scope of the present invention as defined by the appended claims.

## Claims

1. A press felt (20, 80) for use in the press section (10) of a papermaking machine, the press felt (20, 80) comprising:
a base fabric layer (52, 82) and at least one layer of a staple fiber batt material (58, 89) connected to the base fabric layer (52, 82), the press felt (20, 80) having a paper side (PS) surface which when in operation is in contact with a paper web (30) conveyed thereon and a machine side (MS) surface which contacts various press section components, the staple fiber batt material (58, 89) comprising between 20% to 80% by weight of a non-fibrillatable regenerated cellulosic staple fiber consisting of fibers with a size from at least about 1.1 dtex to about 44 dtex, and from 80% to 20% by weight of a polymeric staple fiber.

2. A press felt (20, 80) according to Claim 1, wherein the staple fiber batt material (58, 89) comprises a generally uniform physical distribution of the regenerated cellulosic staple fibers with the polymeric staple fiber.

3. A press felt (20, 80) according to claim 2, wherein the polymeric staple fibers and the regenerated cellulosic staple fibers have an approximately equal size.

4. A press felt (20, 80) according to Claim 2, wherein the polymeric staple fiber is nylon.

5. A press felt (20, 80) according to claim 2, wherein the staple fiber batt material (58, 89) comprises between 50% to 80% by weight of the regenerated cellulosic staple fiber and from 50% to 20% by weight of the polymeric staple fiber.

6. A press felt (20, 80) according to claim 1, wherein the at least one layer of the staple fiber batt material (58, 89) comprises a plurality of layers (60, 62, 64, 66, 68; 90, 92, 94, 96, 98) of staple fiber batt material, the regenerated cellulosic staple fiber in a layer (68; 98) of staple fiber batt material on the PS surface of the press felt (20, 80) has a smaller size than the staple fiber batt material of an intermediate layer (60, 62, 64; 90, 92, 94) of the staple fiber batt material adjacent to the base fabric (52, 82).

7. A press felt (20, 80) according to claim 6, wherein the regenerated cellulosic staple fibers in the PS surface batt layer (68; 98) have a dtex of about 2 to about 6, and the regenerated cellulosic fibers of the intermediate batt layer (60, 62, 64; 90, 92, 94) have a dtex of about 8 to about 20.

8. A press felt (20, 80) according to claim 1, wherein a weight of the regenerated cellulosic fiber in the staple fiber batt material (58, 89) in the press felt (20, 80) is from about 75 to about 1000 gsm (grams per square meter).

9. A press felt (20, 80) according to claim 1, wherein a weight of the regenerated cellulosic fiber in the staple fiber batt material (58, 89) in the press felt (20, 80) is from about 300 to about 700 gsm.

10. A press felt (20, 80) according to claim 1, wherein the regenerated cellulosic staple fiber is viscose rayon.

11. A press felt (20, 80) according to Claim 1, wherein the at least one layer of staple fiber batt material (58, 89) comprises a plurality of layers (60, 62, 64, 66, 68; 90, 92, 94, 96, 98), and all of the PS batt layers comprising a blend of from about 20% to about 80% by weight of the regenerated cellulosic staple fiber and from about 80% to about 20% by weight of a polymeric staple fiber.

12. A press felt (20, 80) according to Claim 11, wherein the polymeric staple fiber comprises one or more of nylon 6, nylon 6/6, nylon 6/10, nylon 6/11 or nylon 6/12.

13. A press felt (80) according to claim 1, wherein at least a portion of the base fabric (82) includes multifilaments (83'), at least a portion of which multifilaments (83') are comprised of viscose rayon.

14. A press felt (80) according to claim 1, wherein at least a portion of the base fabric (82) includes spun yarns, at least a portion of said spun yarns are comprised of viscose rayon.

15. A press felt (80) according to claim 1, wherein the base fabric layer (82) is either a woven or nonwoven fabric, and comprises polymeric fibers and regenerated cellulosic staple fibers.

16. A press felt (20, 80) according to claim 1, further comprising a hydrophobic surface treatment material provided on at least one of the regenerated cellulosic staple fibers and the press felt (20, 80).

17. A press felt (20, 80) according to claim 1, wherein the regenerated cellulosic staple batt fibers have a dtex of at least 3.

18. A press felt (20, 80) according to Claim 1, wherein the staple fiber batt material (58, 89) includes a melt fuseable polymeric bi-component staple fiber.

## Patentansprüche

1. Pressfilz (20, 80) zur Verwendung in der Pressenpartie (10) einer Papiermaschine, wobei der Pressfilz (20, 80) umfasst:
eine Basisgewebeschicht (52, 82) und mindestens eine Schicht aus einem Stapelfaser-Vliesmaterial (58, 89), die mit der Basisgewebeschicht (52, 82) verbunden ist, wobei der Pressfilz (20, 80) eine Papierseiten-(PS)-Oberfläche hat, die im Betrieb Kontakt mit einer Papierbahn (30) hat, die darauf befördert wird, und eine Maschinenseiten-(MS)-Oberfläche hat, die Kontakt mit verschiedenen Komponenten der Pressenpartie hat, wobei das Stapelfaser-Vliesmaterial (58, 89) zu 20 bis 80 Gewichtsprozent aus einer nicht-fibrillierbaren regenerierten Zellulose-Stapelfaser, die aus Fasern mit einer Größe von mindestens etwa 1,1 dtex bis etwa 44 dtex besteht, sowie zu 80 bis 20 Gewichtsprozent aus einer Polymer-Stapelfaser besteht.

2. Pressfilz (20, 80) gemäß Anspruch 1, wobei das Stapelfaser-Vliesmaterial (58, 89) eine im Allgemeinen gleichmäßige physische Verteilung der regenerierten Zellulose-Stapelfasern im Verhältnis zu den Polymer-Stapelfasern aufweist.

3. Pressfilz (20, 80) gemäß Anspruch 2, wobei die Polymer-Stapelfasern und die regenerierten Zellulose-Stapelfasern eine annähernd gleiche Größe haben.

4. Pressfilz (20, 80) gemäß Anspruch 2, wobei es sich bei der Polymer-Stapelfaser um Nylon handelt.

5. Pressfilz (20, 80) gemäß Anspruch 2, wobei das Stapelfaser-Vliesmaterial (58, 89) zu 50 bis 80 Gewichtsprozent aus der regenerierten Zellulose-Stapelfaser und zu 50 bis 20 Gewichtsprozent aus der Polymer-Stapelfaser besteht.

6. Pressfilz (20, 80) gemäß Anspruch 1, wobei die mindestens eine Schicht des Stapelfaser-Vliesmaterials (58, 89) aus einer Mehrzahl von Schichten (60, 62, 64, 66, 68; 90, 92, 94, 96, 98) aus Stapelfaser-Vliesmaterial besteht, die regenerierte Zellulose-Stapelfaser in einer Schicht (68; 98) des Stapelfaser-Vliesmaterials auf der PS-Oberfläche des Pressfilzes (20, 80) eine geringere Größe hat als das Stapelfaser-Vliesmaterial einer Zwischenschicht (60, 62, 64; 90, 92, 94) des Stapelfaser-Vliesmaterials direkt angrenzend an das Basisgewebe (52, 82).

7. Pressfilz (20, 80) gemäß Anspruch 6, wobei die regenerierten Zellulose-Stapelfasern in der PS-Oberflächen-Vliesschicht (68; 98) einen dtex-Wert von etwa 2 bis etwa 6 haben und die regenerierten Zellulosefasern der Vlieszwischenschicht (60, 62, 64; 90, 92, 94) einen dtex-Wert von etwa 8 bis etwa 20 haben.

8. Pressfilz (20, 80) gemäß Anspruch 1, wobei ein Gewicht der regenerierten Zellulosefaser in dem Stapelfaser-Vliesmaterial (58, 89) in dem Pressfilz (20, 80) von etwa 75 bis etwa 1000 g/m² (Gramm pro Quadratmeter) beträgt.

9. Pressfilz (20, 80) gemäß Anspruch 1, wobei ein Gewicht der regenerierten Zellulosefaser in dem Stapelfaser-Vliesmaterial (58, 89) in dem Pressfilz (20, 80) von etwa 300 bis etwa 700 g/m² beträgt.

10. Pressfilz (20, 80) gemäß Anspruch 1, wobei es sich bei der regenerierten Zellulose-Stapelfaser um Viskoseseide handelt.

11. Pressfilz (20, 80) gemäß Anspruch 1, wobei die mindestens eine Schicht des Stapelfaser-Vliesmaterials (58, 89) aus einer Mehrzahl von Schichten (60, 62, 64, 66, 68; 90, 92, 94, 96, 98) besteht und alle der PS-Vliesschichten aus einer Mischung aus etwa 20 bis etwa 80 Gewichtsprozent der regenerierten Zellulose-Stapelfaser und etwa 80 bis etwa 20 Gewichtsprozent einer Polymer-Stapelfaser bestehen.

12. Pressfilz (20, 80) gemäß Anspruch 11, wobei die Polymer-Stapelfaser aus einem oder mehreren von Nylon 6, Nylon 6/6, Nylon 6/10, Nylon 6/11 oder Nylon 6/12 besteht.

13. Pressfilz (80) gemäß Anspruch 1, wobei mindestens ein Teil des Basisgewebes (82) Multifilamente (83') enthält, wobei mindestens ein Teil dieser Multifilamente (83') aus Viskoseseide besteht.

14. Pressfilz (80) gemäß Anspruch 1, wobei mindestens ein Teil des Basisgewebes (82) Spinnfasergarne enthält, wobei mindestens ein Teil dieser Spinnfasergarne aus Viskoseseide bestehen.

15. Pressfilz (80) gemäß Anspruch 1, wobei die Basisgewebeschicht (82) entweder ein Webstoff oder ein Faservliesstoff ist und aus Polymerfasern und regenerierten Zellulose-Stapelfasern besteht.

16. Pressfilz (20, 80) gemäß Anspruch 1, der ferner ein hydrophobisches Oberflächenbehandlungsmaterial umfasst, das auf mindestens einem der regenerierten Zellulose-Stapelfasern und dem Pressfilz (20, 80) vorhanden ist.

17. Pressfilz (20, 80) gemäß Anspruch 1, wobei die regenerierten Zellulose-Stapelvliesfasem einen dtex-Wert von mindestens 3 haben.

18. Pressfilz (20, 80) gemäß Anspruch 1, wobei das Stapelfaser-Vliesmaterial (58, 89) eine aufschmelzbare Polymer-Bikomponenten-Stapelfaser enthält.

## Revendications

1. Un feutre de presse (20, 80) pour une utilisation dans la section des presses (10) d'une machine à papier, le feutre de presse (20, 80) comportant :
une couche d'étoffe de base (52, 82) et au moins une couche d'un matériau de nappage de fibre brute (58, 89) connectée à la couche d'étoffe de base (52, 82), le feutre de presse (20, 80) ayant une surface côté papier (PS) qui, en fonctionnement, est en contact avec une feuille de papier continue (30) amenée sur cette dernière et une surface côté machine (MS) qui est en contact avec les divers composants de section des presses, le matériau de nappage de fibre brute (58, 89) comportant entre 20 % et 80 % poids d'une fibre brute cellulosique régénérée non fibrillable composée de fibres d'une taille d'au moins environ 1,1 dtex à environ 44 dtex, et de 80 % à 20 % poids d'une fibre brute polymère.

2. Un feutre de presse (20, 80) selon la revendication 1, où le matériau de nappage de fibre brute (58, 89) comporte une répartition physique généralement uniforme des fibres brutes cellulosiques régénérées avec la fibre brute polymère.

3. Un feutre de presse (20, 80) selon la revendication 2, où les fibres brutes polymères et les fibres brutes cellulosiques régénérées ont une taille approximativement égale.

4. Un feutre de presse (20, 80) selon la revendication 2, où la fibre brute polymère est du nylon.

5. Un feutre de presse (20, 80) selon la revendication 2, où le matériau de nappage de fibre brute (58, 89) constitue entre 50 % et 80 % poids de la fibre brute cellulosique régénérée et de 50 % à 20 % poids de la fibre brute polymère.

6. Un feutre de presse (20, 80) selon la revendication 1, où l'au moins une couche du matériau de nappage de fibre brute (58, 89) comporte une pluralité de couches (60, 62, 64, 66, 68 ; 90, 92, 94, 96, 98) de matériau de nappage de fibre brute, la fibre brute cellulosique régénérée dans une couche (68 ; 98) de matériau de nappage de fibre brute sur la surface PS du feutre de presse (20, 80) a une taille plus petite que le matériau de nappage de fibre brute d'une couche intermédiaire (60, 62, 64 ; 90, 92, 94) du matériau de nappage de fibre brute adjacent à l'étoffe de base (52, 82).

7. Un feutre de presse (20, 80) selon la revendication 6, où les fibres brutes cellulosiques régénérées dans la couche de nappage de surface PS (68 ; 98) ont un dtex d'environ 2 à environ 6, et les fibres cellulosiques régénérées de la couche de nappage intermédiaire (60, 62, 64 ; 90, 92, 94) ont un dtex d'environ 8 à environ 20.

8. Un feutre de presse (20, 80) selon la revendication 1, où un poids de la fibre cellulosique régénérée dans le matériau de nappage de fibre brute (58, 89) dans le feutre de presse (20, 80) est d'environ 75 à environ 1 000 g/m² (grammes par mètre carré).

9. Un feutre de presse (20, 80) selon la revendication 1, où un poids de la fibre cellulosique régénérée dans le matériau de nappage de fibre brute (58, 89) dans le feutre de presse (20, 80) est d'environ 300 à environ 700 g/m².

10. Un feutre de presse (20, 80) selon la revendication 1, où la fibre brute cellulosique régénérée est de la rayonne viscose.

11. Un feutre de presse (20, 80) selon la revendication 1, où l'au moins une couche de matériau de nappage de fibre brute (58, 89) comporte une pluralité de couches (60, 62, 64, 66, 68 ; 90, 92, 94, 96, 98), et toutes les couches de nappage PS constituant un mélange d'environ 20 % à environ 80 % poids de la fibre brute cellulosique régénérée et d'environ 80 % à 20 % d'une fibre brute polymère.

12. Un feutre de presse (20, 80) selon la revendication 11, où la fibre brute polymère comporte un ou plusieurs élément(s) parmi : nylon 6, nylon 6/6, nylon 6/10, nylon 6/11 ou nylon 6/12.

13. Un feutre de presse (80) selon la revendication 1, où au moins une portion de l'étoffe de base (82) comprend des multifilaments (83'), une portion au moins de ces multifilaments (83') étant constituée de rayonne viscose.

14. Un feutre de presse (80) selon la revendication 1, où au moins une portion de l'étoffe de base (82) comprend des filés, une portion au moins desdits filés étant constituée de rayonne viscose.

15. Un feutre de presse (80) selon la revendication 1, où la couche d'étoffe de base (82) est une étoffe soit tissée soit non tissée, et comporte des fibres polymères et des fibres brutes cellulosiques régénérées.

16. Un feutre de presse (20, 80) selon la revendication 1, comportant de plus un matériau de traitement à surface hydrophobe fourni sur au moins un élément parmi les fibres brutes cellulosiques régénérées et le feutre de presse (20, 80).

17. Un feutre de presse (20, 80) selon la revendication 1, où les fibres de nappage brutes cellulosiques régénérées ont un dtex d'au moins 3.

18. Un feutre de presse (20, 80) selon la revendication 1, où le matériau de nappage de fibre brute (58, 89) comprend une fibre brute à deux composants polymère fusible obtenue par fusion.
